# EUROPEAN PATENT APPLICATION

(11) **EP 4 711 276 A1**
(43) Date of publication of application: **18.03.2026**
(21) Application number: 24461618.1
(22) Date of filing: 13.09.2024
(51) Int. Cl.: B64D 11/06, B60N 2/015, F16C 27/06

(54) **MOUNTING FITTING**

(71) Applicant: B/E Aerospace Fischer GmbH, 84034 Landshut (DE)
(72) Inventor: KALISZCZYK, Piotr Krzysztof, 51-317 Wroclaw (PL); KOLODZIEJCZAK, Marcin Szymon, 51-317 Wroclaw (PL); CHODYNIECKI, Marcin Adam, 51-317 Wroclaw (PL)
(74) Representative: Dehns

(57) **Abstract**

A mounting fitting for mounting an object to a surface, the mounting fitting comprising an elongate fitting body (10) comprising a first portion (11) configured to be attached to the object, in use, and a second portion (12) configured to attach the fitting relative to the surface, in use, wherein the first portion defines a housing (104) and a damping assembly (100) mounted into the housing, the damping assembly defining means for attachment of the object, in use, to the first portion and incorporating an elastomeric member between the housing and the means for attachment.

## Description

### TECHNICAL FIELD

The present disclosure concerns fittings for mounting items to a floor or other platform, such as, but not exclusively, for mounting a seat in a vehicle or aircraft.

### BACKGROUND

There is, in many applications, a need to removably mount and secure an item to a platform or floor. In some situations, it may be desired to mount the object at different positions according to circumstances. One example, is seating used in vehicles or aircraft, including helicopters. Seats are typically mounted to the floor or platform of the vehicle/aircraft using fittings attached to a lower part of the seat which slide into and are secured in tracks provided on the floor/platform. The fittings and tracks may be configured to allow sliding movement of the seat along the track to an appropriate position where the fitting may be releasably locked relative to the track to secure the seat at the required position along the track. A problem with known fittings, however, is that any vibrations at the platform or floor, e.g. from the vehicle motor or environment, are transmitted through the fitting to the item e.g. the seat. This can result in wear on the fitting and attached parts, reducing their life and leaving them vulnerable to breakage, can cause fasteners between the fitting and the floor/platform or fasteners between the fitting and the item to loosen, and also resulting in a lack of comfort to e.g. a passenger in the seat.

There is a desire for a mounting fitting that reduces the transmission of vibrations therethrough.

### SUMMARY

Accordingly, there is provided a mounting fitting for mounting an object to a surface, the mounting fitting comprising an elongate fitting body comprising a first portion configured to be attached to the object, in use, and a second portion configured to attach the fitting relative to the surface, in use, wherein the first portion defines a housing and a damping assembly mounted into the housing, the damping assembly defining means for attachment of the object, in use, to the first portion and incorporating an elastomeric member between the housing and the means for attachment.

The damping assembly may comprise an inner sleeve defining the means for attachment, and may also/alternatively comprise an outer sleeve located between the elastomeric member and the housing.

The elastomeric member may comprise a rubber material.

In embodiments, the damping assembly is formed as an integral unit which is press fit into the housing.

The housing may have a substantially circular or oval cross-section and the damping assembly has a corresponding cross-section.

The first portion may be configured to be attached to a vehicle seat e.g. an aircraft or helicopter seat and the second portion may be configured to attach to a track on a floor or platform.

Also provided is a vehicle seat system comprising a seat, and a floor track arranged on a floor or platform of the vehicle, and a mounting fitting as defined above, wherein the first portion is attached to the seat and the second portion is attached to the track.

### BRIEF DESCRIPTION

Examples of the mounting fitting according to this disclosure will now be described with reference to the drawings. It should be noted that these are examples only and variations are possible within the scope of the claims. In particular (but not only) the examples are described with reference to mounting a vehicle/aircraft seat to a floor or platform, but it is feasible that the mounting system of this disclosure could also be used for mounting other objects to a floor or platform or similar surface.
Figure 1 shows an example of a mounting fitting according to this disclosure.
Figure 2 shows the fitting of Fig. 1 showing a cross-section of the first portion.
Figure 3 shows a detailed cross-section of the first portion of Fig. 2.
Figure 4 is an exploded view of a fitting such as shown in Figs. 1 to 3.

### DETAILED DESCRIPTION

As mentioned above, there is often a need for an object to be mounted to a surface or platform in different positions. An example is an aircraft seat mounted to the floor/platform of the aircraft. It is sometimes desired to mount the seat at a particular position on a floor or platform and at other times to reconfigure/re-position the seat to a different position. To mount such seats, typically, rails or tracks are provided on the floor or platform and a fitting is provided to be attached to the seat, on one side, and to locate in the track on the other side. The seat will be mounted at a desired position on the track (selected for safety/comfort of the user and/or to allow seat configurations suitable to the circumstances, by locating the fitting in the track and then securing the fitting relative to the track at the desired position. This is typically done by means of fasteners such as screws or bolts, but, more recently, releasable locking mechanisms have also been designed. Such mounting fittings provide a rigid mounting between the item e.g. seat and the floor/platform. As mentioned above, such fittings transmit vibrations from the floor/platform to the item.

Whilst it will not be possible to eliminate transmission of all vibrations, the fitting of the present disclosure aims to reduce the transmission of vibrations through the fitting by providing damping within the fitting to absorb or isolate vibrations.

More specifically, the fitting is provided with an elastomeric insert in a first portion of the fitting which is configured to attach to the item.

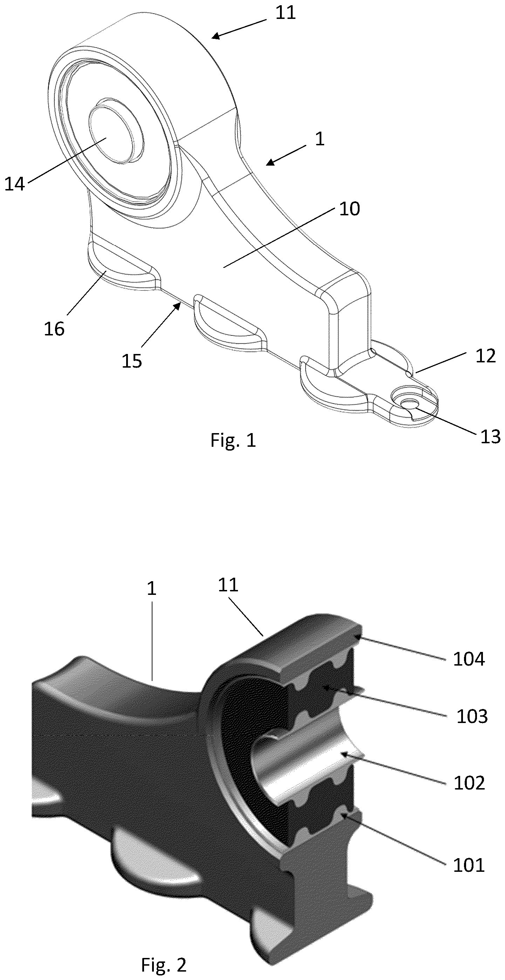

Referring first to Fig. 1, an example of a fitting 1 according to the disclosure comprises an elongate fitting body 10 comprising, at one end, a first portion 11 configured to be fixed to the seat or other object to be mounted and, at the other end, a second portion 12 for securing the fitting to the floor or platform, in use. The first and second portions can be formed integrally or as two separate portions attached together to form the fitting body. The fitting may be secured directly to the floor or platform or may be fitted thereto via a track attached to the floor or platform. The fitting may be secured by a fastener e.g. a screw or bolt passing through a hole 13 at the second portion 12, or via a releasable locking mechanism of some sort.

In the example shown, the first portion 11 is in the form of a flange or bracket or other fitting, shaped or configured to be connected to the seat. In the example shown, the first portion is provided with a hole 14 therethrough. This can be connected to the seat e.g. by a bolt or other fastener.

A lower part 15 of the fitting body may be shaped to be sliding received within a track, in use. In an example where the track is designed with wider groove portions, the fitting may be provided with corresponding widened portions 16, as shown in Fig. 1.

This is just one possible fitting design in which the damping according to the disclosure can be incorporated. Any such fitting, however, will have a first portion configured to be attached to the item to be mounted.

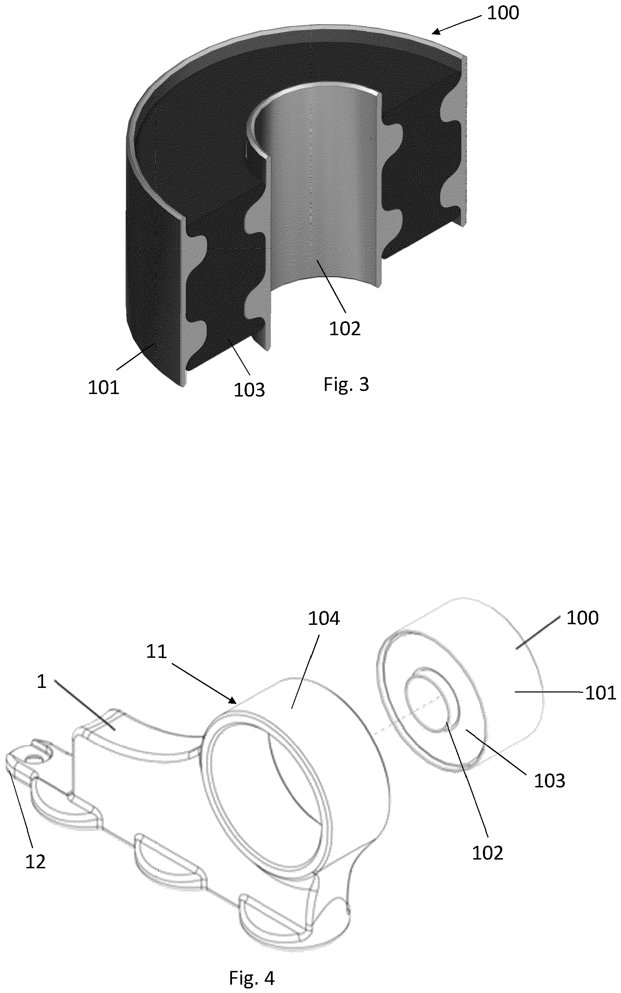

The fitting of the disclosure includes a damping assembly 100, described further below, with reference to Figs. 2 to 4, incorporated into the fitting body at the first portion 11, to provide vibration damping between the fitting body and the item, when attached to the first portion.

The damping assembly 100 comprises an outer sleeve 101, and inner sleeve 102 and an elastomeric member 103 secured between the inner and the outer sleeve. The assembly is fitted into a housing 104 defined by the first portion 11 of the fitting, and the inner sleeve 102 is designed to provide the means for attachment to the item e.g. the seat.

Whilst various shapes and configurations are possible, in the example shown, the first portion 11 defines a housing 104 that has a substantially circular or oval shape and the damping assembly has a corresponding shape to fit tightly inside the housing 104. With the inner sleeve 102 forming a channel or bushing to receive an attachment for attaching the item e.g. seat to the fitting, e.g. a bolt or a pin or other fastener or attachment component.

The elastomeric member 103 is made of a deformable material such as rubber. Rubber is useful in this application due to its ability to undergo large elastic deformation without permanent plastic deformation, it has a high vibration coefficient, is resistant to creep, is simple to manufacture and shape as required and has a high resistance to negative environmental influences e.g. corrosion, temperature fluctuations etc. Other elastomeric materials may, however, also be used. The inner and outer sleeves may be made of e.g. metal to add strength and robustness to the damping assembly 100. The inner and outer sleeves and the elastomeric member may be bonded together to form a single damping assembly unit. For example, the elastomeric member 103 may be vulcanised with the inner and outer sleeves in a mold. The damping assembly is press fit into the housing 104 to ensure a tight fit.

The elastomeric member 103 is able to deform as a result of external forces e.g. vibrations applied to the fitting, and so dampens to some extent the transmission of such forces from the second portion of the fitting to an item attached to the first portion.

The damping assembly 100 is incorporated into a standard fitting design and so does not require any changes to the manner in which the fitting is used/attached, and uses a small number of parts, thus simplifying manufacture, assembly and maintenance. It is also a simple matter to adapt the design of the damping assembly according to the design of the fitting/the item to be attached.

## Claims

1. A mounting fitting for mounting an object to a surface, the mounting fitting comprising an elongate fitting body (10) comprising a first portion (11) configured to be attached to the object, in use, and a second portion (12) configured to attach the fitting relative to the surface, in use, wherein the first portion defines a housing (104) and a damping assembly (100) mounted into the housing (104), the damping assembly defining means for attachment of the object, in use, to the first portion and incorporating an elastomeric member (103) between the housing (104) and the means for attachment.

2. The mounting fitting of claim 1, wherein the damping assembly (100) comprises an inner sleeve (102) defining the means for attachment.

3. The mounting fitting of claim 1 or 2, wherein the damping assembly comprises an outer sleeve (101) located between the elastomeric member (103) and the housing (104).

4. The mounting fitting of Claim 1, wherein the damping assembly is an annular assembly comprising an outer sleeve (101), and inner sleeve (102) and the elastomeric member (103) secured between the inner and the outer sleeves.

5. The mounting fitting of any preceding claim, wherein the elastomeric member (103) comprises a rubber material.

6. The mounting fitting of any preceding claim, wherein the damping assembly is formed as an integral unit which is press fit into the housing (104).

7. The mounting fitting of any preceding claim, wherein the housing has a substantially circular or oval cross-section and wherein the damping assembly has a corresponding cross-section.

8. The mounting fitting of any preceding claim, wherein the second portion (12) comprises means for attachment to the surface, in use.

9. The mounting fitting of claim 8, wherein the means for attachment comprises a lower edge of the fitting body (10).

10. The mounting fitting of any preceding claim, wherein the first portion (11) is configured to be attached to a vehicle seat and the second portion (12) is configured to attach to a track (2) on a floor or platform.

11. The mounting fitting of any preceding claim, further comprising means for locking the fitting to the surface, in use.

12. The mounting fitting of claim 11, wherein the means for locking is means for releasably locking the fitting to the surface, in use.

13. A vehicle seat system comprising a seat, and a floor track (2) arranged on a floor or platform of the vehicle, and a mounting fitting of any preceding claim wherein the first portion is attached to the seat and the second portion is attached to the track.

14. The system of claim 13, wherein the seat is an aircraft seat.
